# EUROPEAN PATENT APPLICATION

(11) **EP 4 657 078 A1**
(43) Date of publication of application: **03.12.2025**
(21) Application number: 24179033.6
(22) Date of filing: 30.05.2024
(51) Int. Cl.: G01P 3/06, G01P 3/24, G01P 3/44, G01P 1/02, B66F 9/075

(54) **SPEED SENSOR ARRANGEMENT AND FORKLIFT TRUCK COMPRISING SUCH AN ARRANGEMENT**

(71) Applicant: Stäubli WFT GmbH, 92237 Sulzbach-Rosenberg (DE)
(72) Inventor: BORODI, Konstantin, 92272 Freudenberg (DE); HIRSCHMANN, Benjamin, 92256 Hahnbach (DE); JANNER, Daniel, 92237 Sulzbach-Rosenberg (DE); GRAF, Peter, 93142 Maxhütte-Haidhof (DE); KREDLER, Cajetan, 92274 Gebenbach (DE); LORA, Julien, 95445 Bayreuth (DE)
(74) Representative: Lavoix

(57) **Abstract**

A speed sensor arrangement (31) for a forklift truck having a frame and at least one supporting wheel (29) articulated on the frame around a first axis of rotation (R1). The speed sensor arrangement comprises an angular sensor (33) comprising a sensor shaft (37) configured to rotate around a second axis of rotation (R2) and a roller (35) secured on the sensor shaft and configured to rotate around the second axis of rotation. The second axis of rotation is included in a first plane perpendicular (P2) to the first axis of rotation (R1), the second axis of rotation intersects the first axis of rotation (R1) and the roller is configured to press on one side surface (47) of the supporting wheel of the forklift truck.

## Description

The present invention concerns a speed sensor arrangement for a forklift truck and a forklift truck comprising such an arrangement.

Speed sensors are currently used in the field of forklift trucks, to ensure a good drivability.

It is known by EP1150124A to use a rotation detector to detect the number of revolutions of a front wheel in a forklift truck and to determine the rotational speed of this wheel. A side of the wheel comprises protrusions at a constant pitch and the sensor detects the number of revolutions of the front wheel based on passage of the protrusions. A guard is attached to the forklift truck. The sensor is protected by the guard from objects on the floor surface. Despite the guard, the sensor is exposed to objects on the floor surface and the replacement of the sensor in case of failure needs to lift the truck.

It is also known by CN206914470U to use a rotational speed sensor arrangement for forklift wheels, which comprises a rotational speed sensor, a first wheel disc coaxially connected with the rotational speed sensor, and a second wheel disc, which is coaxially connected to the wheel. The axes of the first wheel disc and the second wheel disc are parallel to each other and the peripheral surfaces of the first wheel disc and the second wheel disc are in friction transmission. The wheel rotates the rotational speed sensor via the second wheel disc and the first wheel disc. This rotational speed sensor arrangement allows an easy maintenance service but extends vertically and takes up a lot of space. In addition, the second wheel disc is very close to the wheel tread and can be polluted.

The invention aims at creating a speed sensor arrangement for forklift truck wheels, which is easy to service, compact and low sensitive to pollution.
To this end, and according to a first aspect, the invention concerns a speed sensor arrangement for a forklift truck having a frame and at least one supporting wheel articulated on the frame around a first axis of rotation. The speed sensor arrangement comprises an angular sensor comprising a sensor shaft configured to rotate around a second axis of rotation, and a roller secured on the sensor shaft and configured to rotate around the second axis of rotation and to press on one side surface of the supporting wheel of the forklift truck. The second axis of rotation is included in a first plane perpendicular to the first axis of rotation and the second axis of rotation intersects the first axis of rotation.

Thanks to invention, especially thanks to the roller which is pressed on the side surface of the supporting wheel and which rotates around a second axis perpendicular to a first axis around which the supporting wheel rotates, the height of the arrangement is improved. Besides, the speed sensor is protected from the pollution by the side surface of the supporting wheel.

According to advantageous but optional aspects, such a speed sensor arrangement may incorporate one or more of the following features, considered alone or according to any technically allowable combination.
- The second axis of rotation is horizontal, and the roller is configured to press on a front most part of the side surface of the at least one supporting wheel. Thanks to this feature, the roller is easy to change in case the friction surface of the roller gets worn.
- The second axis of rotation is vertical, and the roller is configured to press on a top most part of the side surface of the at least one supporting wheel. Thanks to this feature, the roller is protected from the road pollution.
- The speed sensor arrangement comprises a sensor support, which comprises a movable plate mobile in a second plane perpendicular to the second axis of rotation, the angular sensor being secured on the movable plate, and at least one elastic member configured to act on the movable plate to press the roller against the side surface of the at least one supporting wheel. Thanks to these features, the pressure of the roller against the side surface can be adjusted and the speed sensor arrangement is not sensitive to eventual geometrical defaults between the first and the second rotation axis.
- Each elastic member is a tension spring exerting a traction force on the movable plate with respect to a plate of the sensor support. Thanks to this feature, the elastic member is reliable and economic.
- The movable plate is articulated in rotation on the sensor support around a third axis of rotation parallel to the second axis of rotation. Thanks to this feature, the design of the speed sensor arrangement is very simple.
- The third axis of rotation is defined by a shaft supported by the sensor support. Thanks to this feature, the design of the speed sensor arrangement is very simple.
- The movable plate is movable in translation, with respect to the sensor support along a fourth axis, parallel to the first axis of rotation. Thanks to this feature, the implementation of the speed sensor arrangement is easy.
- Two elastic members act on the movable plate to press the roller against the side surface of the supporting wheel. Thanks to this feature, efforts applied on the movable plate are balanced and jamming is prevented.
- The movable plate has at least one slot and the sensor support is equipped with at least one protruding relief engaged in the slot to guide a translation between the mobile plate and the sensor support. Thanks to this feature, jamming is prevented.

According to a second aspect, the invention relates to a forklift truck including a frame, at least one supporting wheel articulated on the frame around a first axis of rotation and at least one speed sensor arrangement as defined above.

According to advantageous but optional aspects, such a forklift truck may incorporate one or more of the following features, considered alone or according to any technically allowable combination.
- The side surface of the at least one supporting wheel comprises first teeth, the roller comprises second teeth, and the first teeth and the second teeth mesh together. Thanks to this feature, there is no slippery between the roller and the supporting wheel.
- A ratio between, on the one hand, a first external diameter of the roller and, on the other hand, a second external diameter of the at least one supporting wheel, is comprised between 0.33 and 0.8, preferably between 0.4 and 0.7, more preferably between 0.5 and 0.6. Thanks to this feature, the roller is easy to change in case the friction surface of the roller gets worn.
- The third axis of rotation is located above a third plane containing the first axis of rotation and the second axis of rotation. Thanks to this feature, the design of the speed sensor arrangement is very simple.
- The third axis of rotation is located under a third plane containing the first axis of rotation and the second axis of rotation, and between a second vertical plane containing the second axis of rotation and the side surface of the at least one supporting wheel. Thanks to this feature, when the sensor is submitted to an upward vertical acceleration, the inertia force is added to the force of the return spring.

The invention will be better understood, and other advantages thereof will appear more clearly, considering the following description of a forklift truck according to the invention, provided solely as a non-limiting example and made in reference to the appended drawings, in which:
Figure 1 is a perspective view of a forklift truck according to the invention, which incorporates a speed sensor arrangement according to a first embodiment of the invention;
Figure 2 is another perspective view of the forklift truck of the figure 1, taken from a different angle;
Figure 3 is a view at higher scale of the frame III of the figure 2, showing the speed sensor arrangement,
Figure 4 is a view of the back of a speed sensor arrangement visible on figures 2 and 3 and of an adjacent supporting wheel of the forklift truck;
Figure 5 is an exploded view of the speed sensor arrangement and the adjacent supporting wheel of figure 4;
Figure 6 is a view similar to figure 4, for a speed sensor arrangement according to a second embodiment of the invention, together with an adjacent supporting wheel of a forklift truck according to the invention;
Figure 7 is a perspective view of a speed sensor arrangement according to a third embodiment of the invention;
Figure 8 is an exploded view of the speed sensor of figure 7, and
Figure 9 is a view similar to figure 4, for a speed sensor arrangement according to a fourth embodiment of the invention, together with an adjacent supporting wheel of a forklift truck according to the invention.

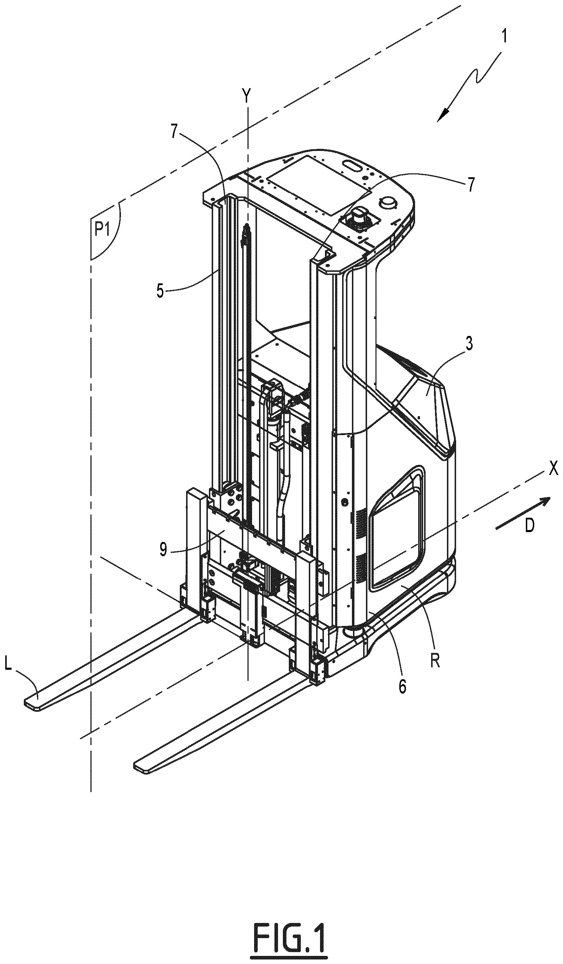

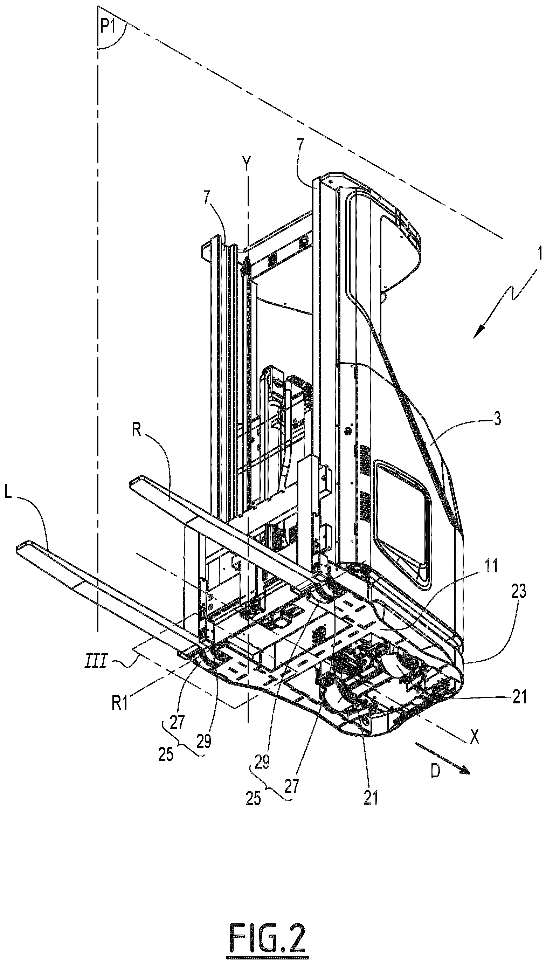

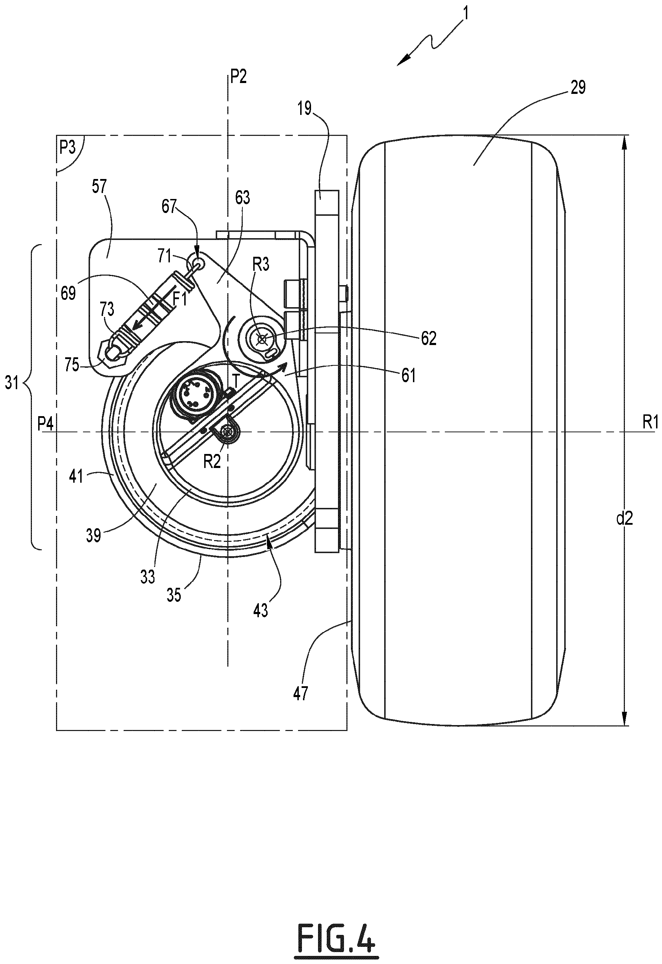

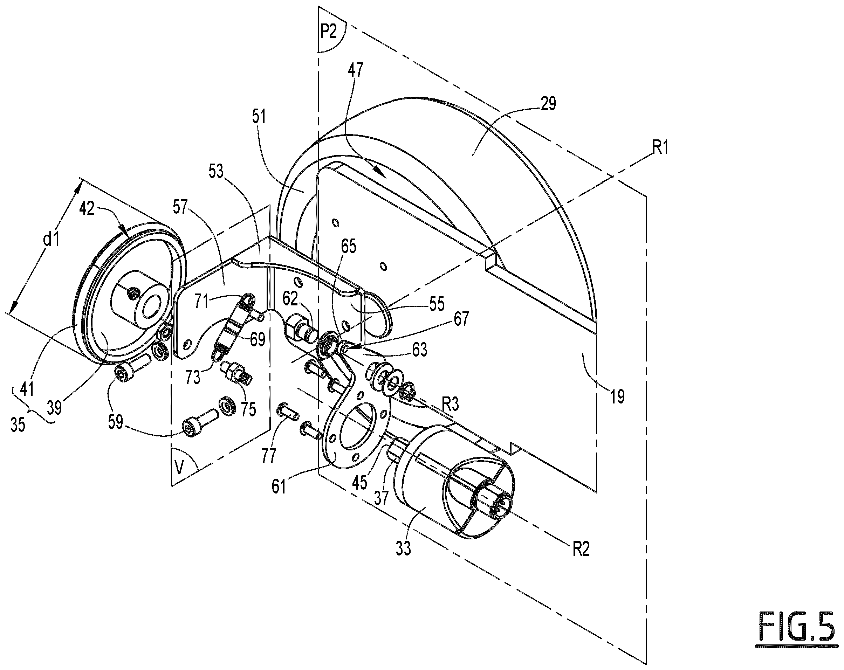

A forklift truck 1 according to a first embodiment of the invention is represented on figures 1 to 5. The forklift truck 1 comprises a base module 3 and a mast assembly 5. The base module 3 extends along a longitudinal axis X. The longitudinal axis X is horizontal when the forklift truck 1 moves on a horizontal and flat surface. The forklift truck 1 defines a forward direction D, which extend along the longitudinal axis X from the mast assembly 5 to the base module 3.

The mast assembly is fixed on a rear part 6 of the truck 1 and extends along a vertical axis Y. The mast assembly comprises two rails 7, which guide a fork carriage 9 along the vertical axis Y.

The forklift truck 1 has a plane of symmetry P1. The plane of symmetry P1 comprises the longitudinal axis X and the vertical axis Y. The truck has a left side L and a right side R on either side of the plane of symmetry P1.

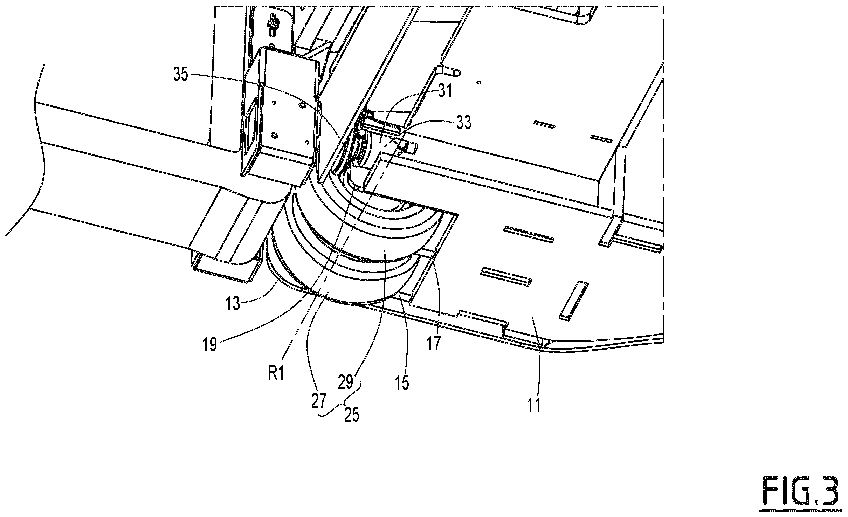

The base module 3 comprises a frame 11. The frame 11 comprises, on a rear extremity 13, two outer plates 15, two intermediate plates 17 and two inner plates 19 arranged symmetrically with respect to the plane of symmetry P1. More precisely, as shown on figure 3, the left side L comprises one of the two intermediate plates 17, which is positioned between one of the two outer plates 15 and one of the inner plates 19.

The outer plates 15, the intermediate plates 17 and the inner plates 19 are vertical and parallel to the longitudinal axis X, thus to the plane of symmetry P1.

The base module 3 comprises a driving and steering wheel module 21 mounted on a front part 23 of the truck 1.

The base module 3 comprises supporting wheels 25. The supporting wheels 25 are mounted two by two, on the left side L and on the right side R, on the rear part 6. More precisely, on the left side L, an outer supporting wheel 27 is mounted and articulated between the outer plate 15 and the intermediate plate 17 and an inner supporting wheel 29 is mounted and articulated between the intermediate plate 17 and the inner plate 19.

The outer and the inner supporting wheel 27 and 29 rotates around a first axis of rotation R1. The first axis of rotation R1 is perpendicular to the longitudinal axis X and to the vertical axis Y, thus to the plane of symmetry P1. The supporting wheels 25 are nondirectional. In other words, they do not rotate around a vertical or quasi-vertical axis to steer the forklift truck 1. Thus the first axis of rotation R1 is fixed with respect to the frame 11.

The forklift truck 1 comprises a speed sensor arrangement 31 mounted on the frame 11. The speed sensor arrangement 31 comprises an angular sensor 33 and a roller 35.

The angular sensor 33 comprises a sensor shaft 37. The sensor shaft 37 rotates around a second axis of rotation R2.

The second axis of rotation R2 is included in a first plane P2 perpendicular to the first axis of rotation R1.

The roller 35 comprises a disk 39 and a rubber toroidal seal 41. The disk 39 comprises an external cylindrical surface 42 which comprises a slot 43 in which the rubber toroidal seal 41 is received.

The roller 35 is secured at an extremity 45 of the sensor shaft 37, rotates around the second axis of rotation R2 and presses against a side surface 47 of the inner supporting wheel 29.

The second axis of rotation R2 intersects the first axis of rotation R1 when the roller 35 presses against the side surface 47 of the inner supporting wheel 29.
d1 denotes a first external diameter d1 of the roller 35.
d2 denotes a second external diameter d2 of the inner supporting wheel 29

Advantageously, a ratio between the first external diameter d1 and the second external diameter d2 is comprised between 0.33 and 0.8, preferably between 0.4 and 0.7, and more preferably between 0.5 and 0.6.

Advantageously, the second axis of rotation R2 is parallel to the longitudinal axis X, in other words horizontal, and the roller 35 presses on a front most part 51 of the side surface 47 of the inner supporting wheel 29.

Advantageously, the forklift truck 1 also comprises a sensor support 53. The sensor support comprises a first plate 55 parallel to the plane of symmetry P1 and a second plate 57 perpendicular to the plane of symmetry P1. The first plate 55 and the second plate 57 formed a right angle and are secured to each other.

The first plate 55 is parallel to, and secured to, the inner plate 19 with first screws 59.

The sensor support 53 also comprises a movable plate 61 and a shaft 62. The movable plate 61 is articulated, around a third axis of rotation R3. The third axis of rotation R3 is defines by the shaft 62.

The movable plate 61 comprises an arm 63 which extend, from the third axis of rotation R3, away from the inner plate 19. An end of the arm 63, opposite to the main portion of the movable plate 61, presents a hole 67.

Advantageously, the third axis of rotation R3 is parallel to the second axis of rotation R2.

Advantageously, the movable plate 61 is mobile in a second plane P3 perpendicular to the second axis of rotation R2. Planes P2 and P3 are perpendicular.

Advantageously, the sensor support 53 comprises at least one elastic member 69 configured to act on the movable plate 61 to press the roller 35 against the side surface 47 of the inner supporting wheel 29.

In this example, the sensor support 53 comprises one elastic member 69.

Advantageously, each elastic member 69 is a tension spring.

In the example of the figures, the elastic member 69 comprises a first end loop 71 and a second end loop 73.

The first end loop 71 is caught in the hole 67 and the second loop is hooked with an attachment screw 75 screwed on the second plate 57.

The elastic member 69 applies a traction force F1 on the arm 63 of the sensor support 53. Due to the articulation of the sensor support 53 around the shaft 62, this traction force F1 is converted into a torque T around the rotation axis R3, which presses the roller 35 against the side surface 47 of the inner supporting wheel 29. In other words, the elastic member 69 indirectly applies a torque T on the movable plate 61, around the third axis of rotation R3, to maintain the roller 35 in contact against the side surface 47 of the inner supporting wheel 29.

Assembly of speed sensor arrangement 31 starts by the fixation, with third screws 77, of the angular sensor 33 on the movable plate 61. Then the roller 35 is fixed on the sensor shaft 37. Then, the shaft 62 and the attachment screw 75 are secured on the second plate 57. The movable plate 61 is then mounted on the shaft 62. The first and second end loops 71, 73 of the elastic member 69 are respectively mounted on the arm 63 and the attachment screw 75. Finally, the subset comprising the first plate 55, the second plate 57, the shaft 62, the attachment screw 75, the elastic member 69, the roller 35 and the angular sensor 33 is secured on the inner plate 19 with the first screws 59, so that the second plate 57 defines a first vertical plane V, perpendicular to the plane of symmetry P1.

The angular sensor 33 is protected to the pollution by the supporting inner supporting wheel 29.

The inner supporting wheel 29 drives the roller 35, by friction between the rubber toroidal seal 41 of the disc 39 and the side surface 47 of the inner supporting wheel 29. This operates the angular sensor 33.

The size of the roller 35 remains in a cylinder, which does not exceed the external diameter d2 of the supporting wheel 29, so that the size of the speed sensor arrangement 31 is optimized. Besides, the speed sensor arrangement 31 enables an easy change of the roller 35 in case the rubber toroidal seal 41 of the roller 35 gets worn.

The traction force F1 of the elastic member 61 adjusts the roller 35 on the side surface 47 of the inner supporting wheel 29, so that the angular sensor 33 is not sensitive to eventual geometrical defaults between the first axis of rotation R1 and the second axis of rotation R2.

P4 denotes a third plane which includes the first axis of rotation R1 and the second axis of rotation R2. In the first embodiment, the third plane P4 is horizontal and parallel to the longitudinal axis X. In this first embodiment, the third axis of rotation R3 is located above the third plane P4.

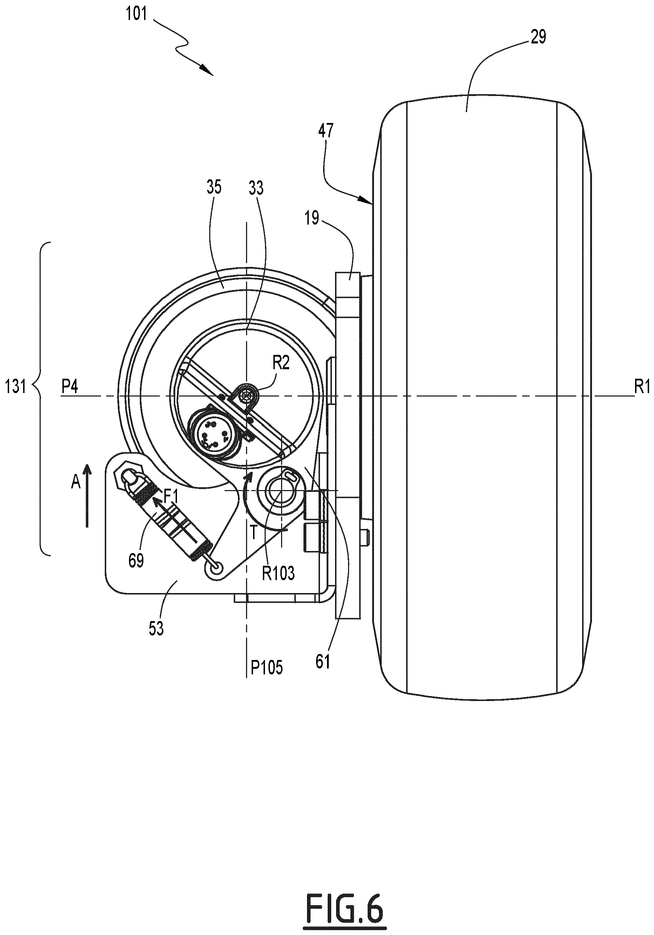

Figure 6 shows a speed sensor arrangement 131 and a forklift truck 101 according to a second embodiment. The speed sensor arrangement 131 is identical to the speed sensor arrangement 31 of the first embodiment except for the features described below. Reference signs of the forklift truck 101 correspond to those of the forklift truck 1 when the referenced element is the same. The reference signs are increased by 100, as compared to the ones of the first embodiment, when they designate elements modified in the speed sensor arrangement 131.

The second embodiment mainly differs from the first embodiment in that the third axis of rotation R103 is located
- below the third plane P4 containing the first axis of rotation R1 and the second axis of rotation R2 and
- between, on the one hand, a second vertical plane P105 containing the second axis of rotation R2 and, on the other hand, the side surface 47 of the inner supporting wheel 29.
Consequently, the inertia forces applied to the speed sensor arrangement 131 when the forklift truck 101 is submitted to an upwardly directed vertical acceleration, in the direction of arrow A on figure 6, are added to the torque T applied by the elastic member 69 so that the adjustment of the roller 35 on the side surface 47 of the inner supporting wheel 29 is improved.

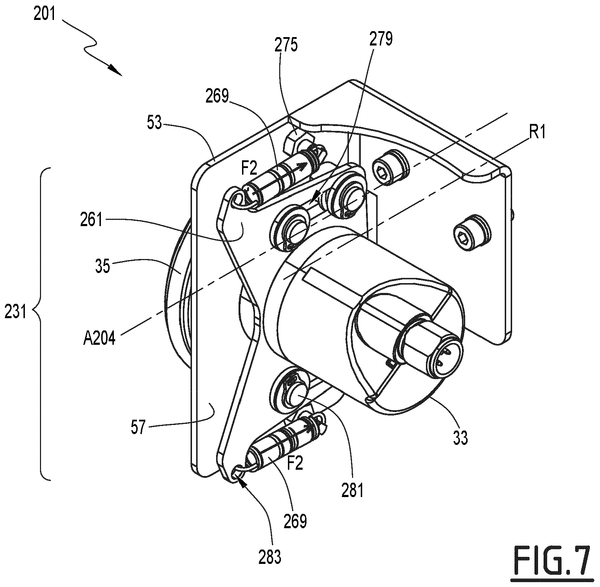

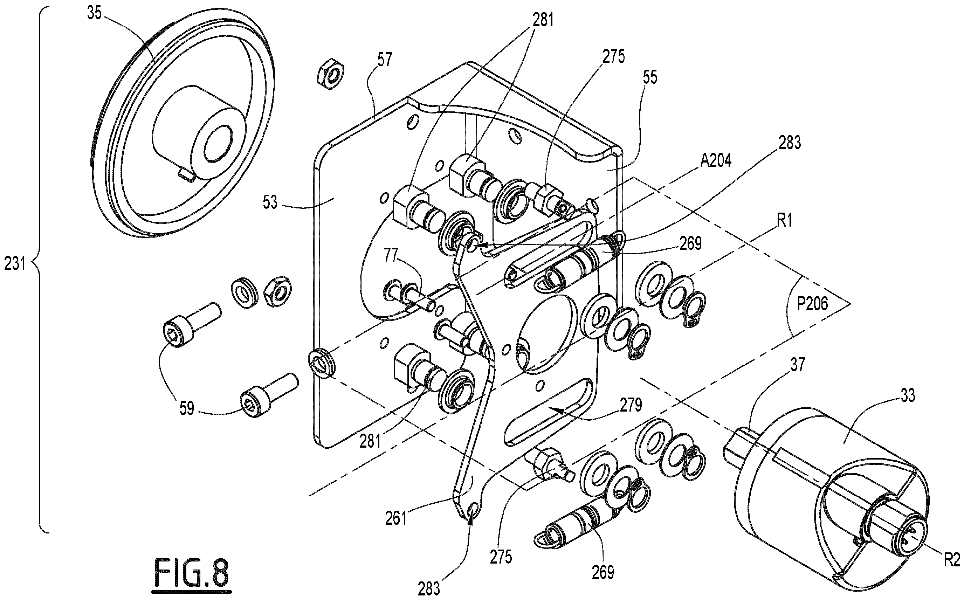

Figures 7 and 8 show a speed sensor arrangement 231 and a forklift truck 201 according to a third embodiment. The speed sensor arrangement 231 is identical to the speed sensor arrangement 31 of the first embodiment except for the features described below. Reference signs of the forklift truck 201 correspond to those of the forklift truck 1 when the referenced element is the same. The reference signs are increased by 200 as compared to the ones of the first embodiment, when they designate elements modified in the speed sensor arrangement 231.

The third embodiment mainly differs from the first embodiment in that the movable plate 261, on which the angular sensor 33 is mounted, is guided in translation with respect to the sensor support 53, in the second plane P3, along a fourth axis A204 parallel to the first axis of rotation R1, instead of being rotated around a third rotation axis, as in the first and second embodiments.

The movable plate 261 is symmetrical with respect to a plane of symmetry P206, which comprises the first axis of rotation R1 and the second axis of rotation R2. The movable plate 261 comprises at least one slot 279.

In this example, the movable plate 261 comprises two elongated slots 279, which extend parallel to the fourth axis A204. The movable plate 261 also comprises two through holes 283.

The sensor support 53 comprises at least one protruding relief 281.

In this example, the sensor support 53 is equipped with four protruding reliefs 281 screwed on the second plate 57. The protruding reliefs 281 are engaged in the slots 279 and cooperate with these slots to guide a translation between the movable plate 261 and the sensor support 53 along the fourth axis A204.

The sensor support 53 comprises two elastic members 269. Each elastic member 269 is caught on one of the through holes 283 and hooked on one of two attachment screws 275 screwed on the second plate 57. The two elastic members 269 apply, on the movable plate 261, a traction force F2, which is oriented parallel the fourth axis A204, to press the roller 35 against the side surface 47 of the supporting wheel 29.

The use of the two symmetric elastic members 269 balances efforts applied on the movable plate 261 and prevents jamming.

The advantage of this embodiment is that the return force is not sensitive to the vertical acceleration applied to the speed sensor arrangement 231. Another advantage of this embodiment is that its design is very simple.

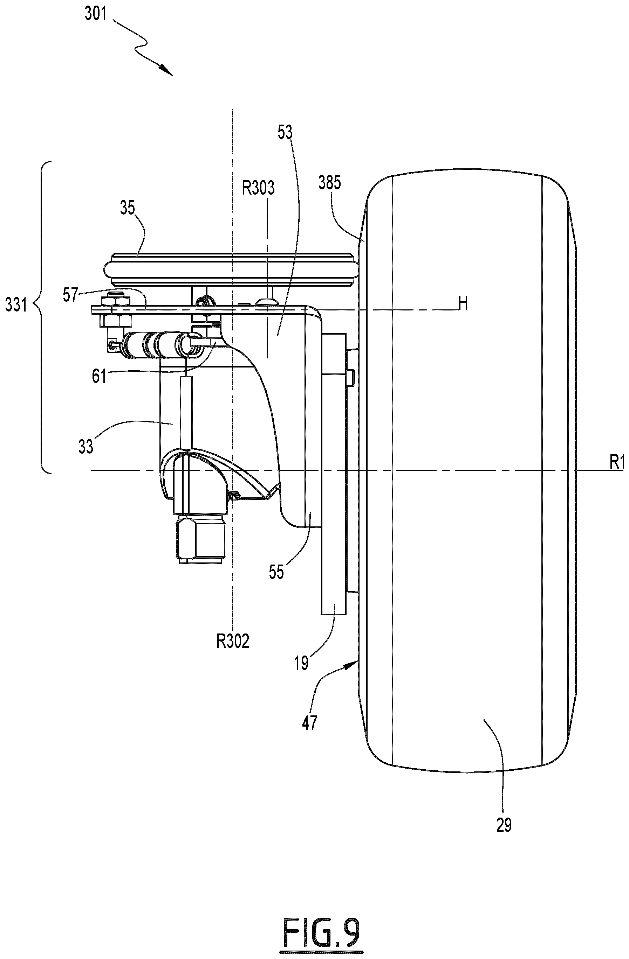

Figures 9 shows a speed sensor arrangement 331 and a forklift truck 301 according to a fourth embodiment. The speed sensor arrangement 331 is identical to the speed sensor arrangement 31 of the first embodiment except for the features described below. Reference signs of the forklift truck 301 correspond to those of the forklift truck 1 when the referenced element is the same. The reference signs are increased by 300 as compared to the ones of the first embodiment, when they designate elements modified in the speed sensor arrangement 331.

In this fourth embodiment, the second axis of rotation R302 and the third axis of rotation R303 are parallel to the vertical axis Y, in other words, the second axis of rotation R302 and the third axis of rotation R303 are vertical. The roller 35 presses on a topmost part 385 of the side surface 47 of the inner supporting wheel 29.

The first plate 55 of the sensor support 53 is secured to the inner plate 19 of the frame 11, so that the second plate 57 defines a horizontal plane H.

The invention can be applied to any type of speed sensor, provided it has a sensor shaft. For instance, the measurement of the rotation of the sensor shaft can be based on Hall effect or optical.

In a variant, not shown and applicable to all embodiments, the inner supporting wheel 29 comprises first teeth and the roller 35 comprises second teeth that mesh with the first teeth. Thus, the contact between the roller 35 and the side surface 47 and equivalent of the inner supporting wheel 29 is made by teeth meshing, so that no slippery can occur between the roller 35 and the side surface 29.

In a variant, not shown and applicable to all embodiments, the forklift truck 1 comprises only a single supporting wheel 25 mounted on its right side R and only a single supporting wheel 25 mounted on its left side L.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims. In particular, the features of the embodiments and variants mentioned here above may be combined.

## Claims

1. A speed sensor arrangement (31; 131; 231; 331) for a forklift truck (1; 101; 201; 301) having a frame (11) and at least one supporting wheel (29) articulated on the frame (11) around a first axis of rotation (R1), the speed sensor arrangement (31; 131; 231; 331) comprising :
- an angular sensor (33) comprising a sensor shaft (37) configured to rotate around a second axis of rotation (R2; R302), and
- a roller (35) secured on the sensor shaft (37) and configured to rotate around the second axis of rotation (R2; R302),
**characterized in that**:
- the second axis of rotation (R2; R302) is included in a first plane perpendicular (P2) to the first axis of rotation (R1),
- the second axis of rotation (R2; R302) intersects the first axis of rotation (R1), and
- the roller (35) is configured to press on one side surface (47) of the supporting wheel (29) of the forklift truck (1; 101; 201; 301).

2. The speed sensor arrangement (31; 131; 231) according to claim 1, wherein:
- the second axis of rotation (R2) is horizontal, and
- the roller (35) is configured to press on a front most part (51) of the side surface (47) of the at least one supporting wheel (29).

3. The speed sensor arrangement (331) according to claim 1, wherein :
- the second axis of rotation (R302) is vertical, and
- the roller (35) is configured to press on a top most part of the side surface (47) of the at least one supporting wheel (29).

4. The speed sensor arrangement (31; 131; 231; 331) according to any one of the previous claims comprising :
- a sensor support (53), which comprises a movable plate (61; 261) mobile in a second plane perpendicular (P3) to the second axis of rotation (R2; R302), the angular sensor (33) being secured on the movable plate (61; 261), and
- at least one elastic member (69; 269) configured to act on the movable plate (61; 261) to press the roller (35) against the side surface (47) of the at least one supporting wheel (29).

5. The speed sensor arrangement (31; 131; 231; 331) according to claim 4, wherein each elastic member (69; 269) is a tension spring exerting a traction force (F1, F2) on the movable plate (61; 261) with respect to a plate (55; 57) of the sensor support (53).

6. The speed sensor arrangement (31; 131; 331) according to any one of the previous claims, wherein the movable plate (61; 261) is articulated in rotation on the sensor support (53) around a third axis of rotation (R3; R103; R303) parallel to the second axis of rotation (R2; R302).

7. The speed sensor arrangement (31; 131; 331) according to claim 6, wherein the third axis of rotation (R3; R303) is defined by a shaft (62) supported by the sensor support (53).

8. The speed sensor arrangement (231) according to any one of the claims 4 and 5, wherein the movable plate (261) is movable in translation, with respect to the sensor support (53) along a fourth axis (A204), parallel to the first axis of rotation (R1).

9. The speed sensor arrangement (231) according to claims 4 and 8, wherein it includes two elastic members (269) acting on the movable plate (261) to press the roller (35) against the side surface (47) of the supporting wheel (29).

10. The speed sensor arrangement (231) according to one of claims 7 and 8, wherein the movable plate (261) has at least one slot (279) and wherein the sensor support (53) is equipped with at least one protruding relief (281) engaged in the slot (279) to guide a translation between the movable plate (261) and the sensor support (53).

11. A forklift truck (1; 101; 201; 301) including a frame (11), at least one supporting wheel (29) articulated on the frame (11) around a first axis of rotation (R1) and at least one speed sensor arrangement (31; 131; 231; 331) according to any preceding claim.

12. The forklift truck (1; 101; 201; 301) according to the previous claim, wherein:
- the side surface (47) of the at least one supporting wheel (29) comprises first teeth,
- the roller (35) comprises second teeth, and
- the first teeth and the second teeth mesh together.

13. The forklift truck (1; 101; 201; 301) according to any one of claims 11 and 12, wherein a ratio (d1/d2) between, on the one hand, a first external diameter (d1) of the roller (35) and, on the other hand, a second external diameter (d2) of the at least one supporting wheel (29), is comprised between 0.33 and 0.8, preferably between 0.4 and 0.7, more preferably between 0.5 and 0.6.

14. The forklift truck (101) according to one of claims 11 to 13, wherein the speed sensor arrangement is according to claim 6 and wherein the third axis of rotation (R3) is located above a third plane (P4) containing the first axis of rotation (R1) and the second axis of rotation (R2).

15. The forklift truck (101) according to one of claims 11 to 13, wherein the speed sensor arrangement is according to claim 6 and wherein the third axis of rotation (R103) is located :
- under a third plane (P4) containing the first axis of rotation (R1) and the second axis of rotation (R2), and
- between a second vertical plane (P105) containing the second axis of rotation (R2) and the side surface (47) of the at least one supporting wheel (29).
